# EUROPEAN PATENT SPECIFICATION

(11) **EP 1 973 029 B1**
(45) Date of publication and mention of the grant of the patent: **21.07.2010**
(21) Application number: 07104694.0
(22) Date of filing: 22.03.2007
(51) Int. Cl.: G06F 3/033, G06F 3/048

(54) **Input device for continuous gesturing within a user interface**
Eingabevorrichtung für kontinuierliche Gesten in einer Benutzerschnittstelle
Dispositif d'entrée pour geste continu au sein d'une interface d'utilisateur

(43) Date of publication of application: 24.09.2008
(73) Proprietor: RESEARCH IN MOTION LIMITED, Waterloo, Ontario N2L 3W8 (CA)
(72) Inventor: Fyke, Steven Henry, Waterloo, Ontario N2L 6M1 (CA); Orr, Kevin, Elmira, Ontario N3B 3C9 (CA); Burrell, Douglas James Arthur, Waterloo Ontario N2T 1W2 (CA)
(74) Representative: Howson, Richard G.B.

(56) References cited:
- EP-A- 1 241 558
- FR-A1- 2 861 886
- US-A- 6 097 372
- US-A1- 2002 093 481
- US-A1- 2002 140 668
- US-B1- 6 396 477

## Description

The present invention relates generally to digital or analog physical motion based input devices. More particularly, the present invention relates to rotary input devices, such as trackballs and scroll wheels, used to navigate within a user interface.

While mobile communication devices continue to decrease in size, they also have increasingly sophisticated interfaces. From simple keypads for dialing phone numbers, the interfaces for these devices have matured to include color displays, graphical user interfaces ("GUIs"), QWERTY keyboards, and touch screens, etc. "Clickable" trackballs and scroll wheels have also been implemented in mobile devices, and are particularly suited to them, due to their small form factor. Rotational movement of the trackball or scroll wheel is converted into cursor movement, or scrolling movement, while an item is selected, or an action initiated, by depressing the trackball or scroll wheel. Their small form factor can, however, be a disadvantage. To navigate through long lists or documents requires repetitive and discontinuous movements of the thumb or hand across the trackball or scroll wheel, which can lead to discomfort and repetitive strain injuries, such as carpal tunnel syndrome.

Other input devices, such as touch pads and touch screens, can generate a continuous scrolling signal, in response to a user drawing a finger across the input surface in a desired direction and then holding down the fingertip as long as a continuous scrolling signal is desired. Unfortunately, these devices do not provide the control or the tactile feedback of a trackball-based pointing device, nor are they particularly well suited to handheld mobile applications due to their relatively large size requirements.

FR2861886 discloses that a trackball may be used to generate a two-dimensional input signal, and an accompanying touchpad then allows the user to access a zooming feature to be carried out with respect to data identified by the two-dimensional input signal.

US6097372 teaches a trackball with concentric sensors for detecting motion peripheral to the trackball. By moving the trackball about a z-axis while simultaneously sequentially touching the concentric sensors, the user generates a composite input signal that provides information regarding rotation about the z-axis.

It is, therefore, desirable to provide an input device that provides the advantages of a trackball or scroll wheel, and that provides continuous gesturing, such as scrolling, within a graphical user interface.

### GENERAL

Generally, there is provided a method, device and system for providing input to an electronic device, such as a handheld mobile communications device. Although the specific embodiments described below refer to a handheld mobile communications device, those skilled in the art will appreciate that the input device can be employed advantageously in many other applications requiring input signals from a user. The input, or pointing, device may have a contact detector disposed adjacent a rotary input device, such as a trackball or scroll wheel, that permits a user to initiate a continuing gesture, such as a scrolling gesture.

In a first aspect there may be provided an input device for a handheld mobile communications device, comprising: a rotary input device to generate a rotary input signal when actuated; a contact detector, disposed adjacent the rotary input device, to generate a detector input signal when actuated at an initial position, the rotary input signal and the detector input signal generating a composite input signal to control a continuous function in a user interface when the rotary input device is actuated prior to actuating the contact detector in a substantially continuous user input; characterized in that further actuation of the contact detector by moving from the initial position to a second position further controls the continuous function initiated by the composite input signal; and wherein the continuous function is a scrolling function, and the further actuation of the contact detector from the initial position to the second position further controls the magnitude of the continuous function initiated by the composite input signal.

In a further aspect, there may be provided a handheld mobile communications device having an input device according to the first aspect.

In yet another aspect there may be provided a method of generating a continuous function in a graphical user interface in a handheld mobile communications device, comprising: detecting a substantially continuous user actuation of a rotary input device and a contact detector disposed adjacent the rotary input device; generating a composite input signal in accordance with the detected actuation of the rotary input device prior to the actuation of the contact detector at an initial position; invoking the continuous function in response to the composite input signal; characterized in that further actuation of the contact detector by moving from the initial position to a second position further controls the continuous function invoked by the composite input signal; and wherein the continuous function is a scrolling function, and the further actuation of the contact detector further controls the magnitude of the continuous function initiated by the composite input signal.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 shows an input device with a concentric contact detector;
Fig. 2 shows an input device with a concentric contact detector array;
Fig. 3 shows an input device with a linear contact detector;
Fig. 4 shows an input device with a semicircular contact detector;
Fig. 5 shows a handheld mobile communications device incorporating an input device;
Fig. 6 is a block diagram of handheld mobile communications device incorporating an input device; and
Figs. 7 and 8 show user actuation of an input device.

### DESCRIPTION OF PREFERRED EMBODIMENTS

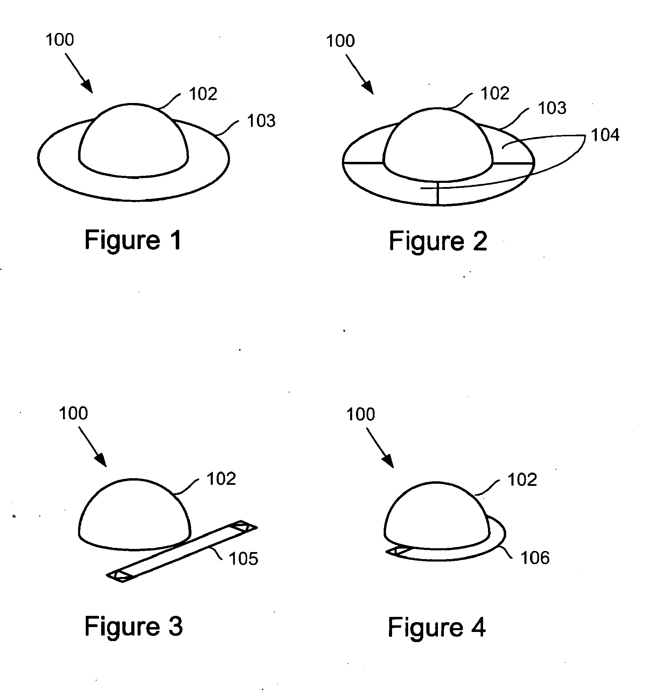

An embodiment of the input device 100 is depicted in Figure 1. The device comprises a rotary input device, such as trackball 102 or a scroll wheel, and a contact detector 103 adjacent to the rotary input device. A "rotary input device", as used herein, means any input or pointing device that permits a user to gesture within a graphical or text-based user interface by rolling a ball, wheel or other rotatable element, such as with the thumb, fingers, or the palm of the hand, to graphically move, point, click or drag a visual indicator, such as a cursor, within the user interface. Movements of the rotary input device can be echoed on a display by movements of the cursor and other visual changes.

The described, non-limiting embodiments use a trackball 102, which can be a conventional trackball, as is well known in the art. The described, non-limiting embodiments are also directed to handheld mobile communications devices; however, the input device can be used in other electronic devices and systems having an interactive user interface. For implementation in handheld devices, it is advantageous to use a trackball that is as small as possible. Some of the smallest trackballs use miniature Hall-effect sensors to detect movement. Others use direct optical tracking. Still others can be clickable, in the sense that they can be depressed in order to send a signal in a manner similar to a mouse button. In handheld applications, it is advantageous, but not necessary, to deploy a trackball embodying as many of these features as possible.

The contact detector 103, which can be disposed concentrically around the trackball 102, as illustrated in Figure 1, can take advantage of any one of several well-known technologies. In an embodiment, the detector can be a capacitive touchpad capable of resolving the coordinates of the point of contact of a finger or other object, but it can also employ other well known touch technologies for detecting contact with its surface, such as resistive layers in the pad, surface acoustic waves passing over the surface of the pad, infrared beam and sensor grids, strain gauges, optical imaging of the pad, dispersive signal technology measuring the mechanical energy of contact, proximity detection, thermal sensing and acoustic pulse recognition technology. The choice of detector technology will depend on the ruggedness desired, and other factors, such as the desired sensitivity. The choice of detector technology will also be determined by ease of implementation, and cost, but it should be understood that any detector can be employed, as long as it can be combined with the rotary input device to achieve the combined input scheme described herein. For example, the detector 103 can also be implemented with switches, such as zero-tactile feedback switches.

As illustrated in Figure 2, the input device 100 can use an array of detector elements 104 to form the contact detector 103. Such an array can, for example, be divided into four quadrants representing up, down, left and right, or forwards, backwards, left and right. It will be appreciated that a detector array can be made of any number of detector elements that they can be arranged or sized in any way that makes it practical and/or ergonomic for a user to combine the actuation of the trackball 102 and the contact detector 103 in a substantially continuous motion. Figures 3 and 4 illustrate further exemplary contact detector arrangements, such as a linear contact detector 105 and a semicircular contact detector 106. These illustrations are provided by way of example only, and, as will be appreciated by those of skill in the art, the contact detector can be of any shape suitably disposed in close proximity adjacent to the trackball 102. For embodiments that use a scroll wheel (not shown) the contact detector can be formed, for example, of two separate detector elements placed above and below the scroll wheel, in a position where a user's finger or thumb would naturally come to rest after turning the wheel.

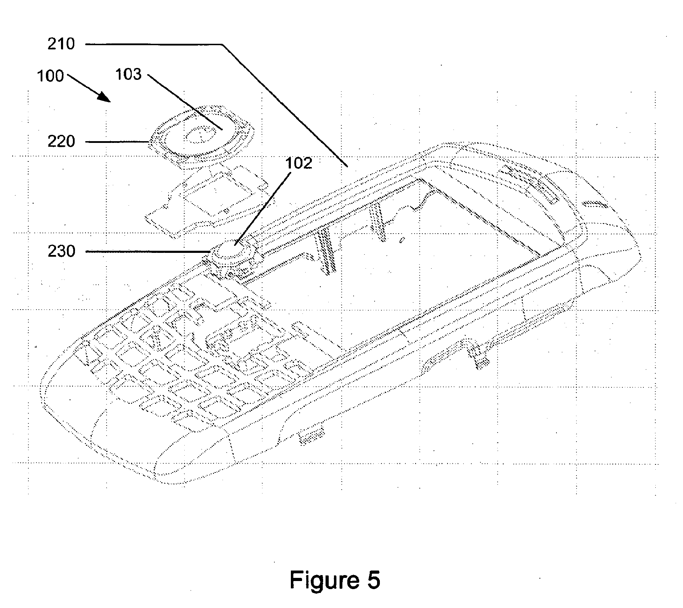

Figure 5 illustrates the physical assembly of the input device 100 into a handheld mobile communications device 210. As illustrated, a suitably small trackball assembly 230, such as the Panasonic^{™} EVQWJN illuminated Jog Ball^{™}, is mounted within the faceplate of the handheld communications device 210. A contact detector ring 220, such as the capacitive touchpad 103 in Figure 1, is mounted overtop of the trackball assembly 230 such that it surrounds the trackball 102, and the inner edge of the touchpad 103 is adjacent to the trackball 102. The touchpad 103 is disposed such that a user's finger or thumb can actuate the trackball 102 and contact the touchpad 103 in one seamless and ergonomic motion. Other arrangements and embodiments of a trackball and detector are possible, as shown in Figures 2 to 4, and as described above more generally in relation to scroll wheels or other rotary input devices.

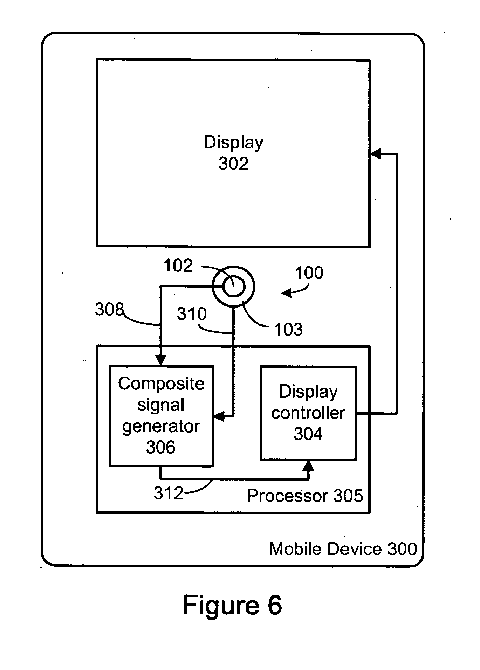

Figure 6 is a block diagram of a handheld mobile device 300 incorporating the input device 100. Only those elements of the handheld device necessary to the operation of the input device 100 are shown. The handheld device 300 comprises the input device 100, a display 302, a processor 305 executing appropriate application software, a display controller 304 and a composite signal generator 306. The display 302 can be any suitable display, such as an LCD display, for a handheld device. Under the control of the display controller 304, the display 302 displays appropriate user interfaces, including text-based and graphical user interfaces, in accordance with the application software executing on the handheld device. The displayed interfaces can include navigation tools including cursors, highlight bars, scroll bars, drop-down menus, pop-up menus and other means to permit the user to navigate through the interface, invoke desired functions, and complete desired operations, in accordance with the application software, using the input device 100. Items displayed in the display can include email, pick lists, text-based documents, image-based documents, web pages, and other information commonly displayed to a user of a handheld mobile device.

The display controller 304 and the composite input signal generator 306 can be implemented in hardware, software or a combination thereof, and interoperate in conjunction with the processor 305. In particular, embodiments of the composite input signal generator 306 can be implemented as an electronic circuit, and/or represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including compact disk read only memory (CD-ROM), memory device (volatile or non-volatile), or similar storage mechanism. The machine-readable medium can contain various sets of instructions, code sequences, configuration information, or other data, which, when executed, cause the processor 305 to perform steps in a method. Those of ordinary skill in the art will appreciate that other instructions and operations necessary to implement the operations and functions described below can also be stored on the machine-readable medium. Software running from the machine-readable medium can interface with circuitry of the handheld device 300 to perform the described tasks.

Electrical input signals 308 and 310 are generated by the trackball 102 and contact detector 103, respectively, in response to their actuation by a user. The input signals 308 and 310 are fed to the composite input signal generator 306, where they are combined, or otherwise processed, to form a composite input signal 312. The information contained in the trackball and contact detector input signals 308 and 310, and in the resulting composite input signal 312, will depend on the actual rotary and touch input technologies implemented in the input device 100. The information can include the rate and direction of actuation of the trackball 102, the coordinates of the point of contact on the contact detector 103, direction and rate of movement of the user's finger across the contact detector, and/or other spatial information relating to the actuation of either the trackball 102 or contact detector 103.

The composite input signal 312 is used by the display controller 304 to control a repetitive or continuing function, or operation, within the user interface displayed in display 302. For example, the resulting composite input signal 312 can control a graphical user interface to continue scrolling through a document, email or list until the user ceases to touch the contact detector 103. The speed and direction of scrolling can be determined by the speed and direction with which the user actuated the trackball 102 prior to contacting the contact detector 103. It is also contemplated that the length of time the user's finger or thumb remains on the detector can modify the speed of scrolling. For example, the speed of scrolling can increase or decrease according to a predetermined profile, or can be governed by a negative inertia system, such as that used by IBM^{™} Trackpoint^{™} pointing devices.

In another example, the user could select large portions of text within a document. The user would initiate a "select" mode within an application program, rotate the trackball 102 to determine the direction of selection, and then hold a finger or thumb on the contact detector 102 until the desired selection is made.

It will be appreciated that the order of actuation of the trackball 102 and contact detector 103 can also be changed, in order to provide added functionality to the handheld device 300. For instance, a user can touch the contact detector 103 and then actuate the trackball 102 to invoke a particular function, operation or mode, such as a drawing or highlighting mode. The trackball 102 can then be used to gesture within the user interface, according to the selected mode. Exiting the selected mode can, for example, be indicated by clicking on the trackball 102 or again touching the contact detector 103.

Power savings can also be realized by implementing the input device 100 in a mobile device 300. For example, where the contact detector 103 is a capacitive ring and the trackball 102 uses four Hall-effect sensors, the capacitive ring operates with minimal power draw (e.g. < 50µA), while each Hall-effect sensor typically draws upwards of 80µA (i.e. a total of 320µA). The lower power requirements of the contact detector 103 can be exploited to activate the trackball 102 when user activity is detected. When close finger proximity or touching of the contact detector 103 is detected, the Hall-effect sensors in the trackball 102 can be enabled for short periods of time. If trackball activity is detected during the enabled period, the trackball 102 can function normally, or it can be deactivated if no activity is detected.

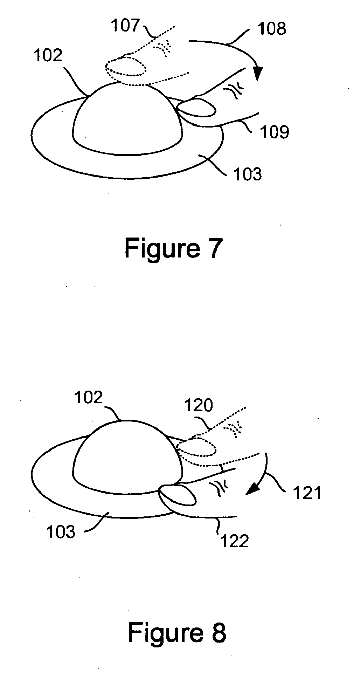

Figure 7, with reference to Figure 6, illustrates the method of operation of the input device 100 to actuate a continuing gesture or action. The user places a finger or thumb on the trackball at a first position 107, actuates the trackball 108 in an arc towards the detector, and actuates the detector at a position 109. As described above, actuation of the trackball 102 and contact detector 103 generates trackball input signals 308 and detector input signals 310, respectively. The substantially continuous movement is converted by the composite input signal generator 306 into a composite input signal 312 having a magnitude determined by the speed at which the trackball is actuated and a direction determined by either the point 109 at which the detector is contacted, the direction of actuation 108 of the trackball, or both. Of course, more than one signal can be generated, and the motion can define other geometries capable of interpretation by the composite input signal generator 306, such as an arc, or circle.

According to embodiments, a brief delay between actuating the trackball 108 and contacting the contact detector 103 can still be interpreted as a substantially continuous motion. Thus, even though the description describes the trackball and detector being actuated in a continuous motion, it is possible to compensate for slight delays or discontinuities between actuation of the trackball and the detector. The sensitivity level for such delays or discontinuities can be hard-coded or adjusted by a user, if desired, much as the double click sensitivity of a mouse can be adjusted. If a substantially continuous motion is not detected by the composite input signal generator 306, the input signals received from the input device 100 will be interpreted in a conventional manner to invoke functions within the user interface.

As illustrated in Figure 8, the detector 103 can also be used to further control the action or operation initiated by the composite input signal 312. For example, the magnitude or direction of scrolling can be varied. By dragging the finger or thumb in contact with the detector from its initial position 120 in a clockwise motion 121 to a second position 122, the direction of scrolling can be reversed and the speed of scrolling decreased. Similarly, dragging the finger in a counterclockwise motion can increase the scrolling speed in a forward direction through a document, email or list. The particular motion required will determined by the shape and layout of the detector 103. As will be apparent to those of skill in the art, the described input device can be configured to generate a series of detector input signals 310 in accordance with the current mode and operation of the mobile device, and in accordance with the application software stored therein.

In a further example, particularly in an input device 100 using an array of detector elements 104 as illustrated in Figure 2, the direction, rather than the speed, of scrolling or cursor movement within the user interface can be modified. For example, a user can initiate a scrolling mode within a map or large picture by actuating the trackball 102 and the contact detector 103 in a continuous motion. Then, by moving the finger around the detector 103, from one contact detector element 104 to another, the user can change navigation direction while maintaining the initial scroll rate determined by the actuation of the trackball 102.

In the preceding description, for purposes of explanation, numerous details are set forth in order to provide a thorough understanding of the embodiments of the invention. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. An input device (100) for a handheld mobile communications device (210, 300), comprising:
a rotary input device (102) to generate a rotary input signal (308) when actuated;
a contact detector (103; 105; 106), disposed adjacent the rotary input device, to generate a detector input signal (310) when actuated at an initial position (120), the rotary input signal and the detector input signal generating a composite input signal (312) to control a continuous function in a user interface
**characterised in that**
when the one of the rotary input device or contact device is actuated prior to actuating the other of the rotary input device or contact detector in a substantially continuous user input;
further actuation of the other of the rotary input device or contact detector further controls the continuous function initiated by the composite input signal; and
wherein the continuous function is a scrolling function, actuation of the rotary input device controls one of magnitude and direction of the scrolling function and the actuation of the contact detector from the initial position to a second position controls the other of the magnitude and direction of the scrolling function.

2. The input device (100) of claim 1 wherein the rotary input device (102) is a trackball or a scroll wheel.

3. The input device (100) of any one of the preceding claims wherein the contact detector (103; 105; 106) is a capacitive touchpad.

4. The input device (100) of any one of the preceding claims wherein the contact detector; surrounds the rotary input device; is an annular disc disposed concentrically around the rotary input device; or comprises an array of detector elements (104).

5. A handheld mobile communications device (210, 300) having a graphical user interface (306) and an input device according to any one of claims 1 to 4.

6. The handheld mobile communications device (300) of claim 5, further comprising a composite signal generator (306), the composite signal generator (306) being configured to generate the composite input signal (312) when the rotary input device (102) and contact detector (103, 105; 106) are actuated in the substantially continuous user input; and the continuous function is controlled by the composite input signal in the graphical user interface (306) in response to the composite input signal.

7. A method of generating a continuous function in a graphical user interface (306) in a handheld mobile communications device (210, 300), comprising:
detecting a substantially continuous user actuation of a rotary input device (102) and a contact detector (103; 105; 106) disposed adjacent the rotary input device;
**characterised in that**
generating a composite input signal (312) in accordance with the detected actuation of one of the rotary input device and contact detector prior to the actuation of the other of the rotary input device and contact detector;
invoking the continuous function in response to the composite input signal;
further actuation of the other of the rotary input device and contact detector further controls the continuous function invoked by the composite input signal; and
wherein the continuous function is a scrolling function, actuation of the rotary input device controls one of magnitude and direction of the scrolling function and the actuation of the contact detector controls the other of the magnitude and direction of the scrolling function.

8. The method of claim 7 wherein further controlling the continuous function comprises controlling speed or direction of the continuous function in response to the further actuation of the contact detector (103; 105; 106).

9. A computer readable medium storing program code for causing a computing device to perform the steps of the method of claim 7 or claim 8.

## Patentansprüche

1. Ein Eingabegerät (100) für ein handgeführtes mobiles Kommunikationsgerät (210; 300), welches umfasst:
ein Dreheingabegerät (102) zur Erzeugung eines Dreheingabesignals (308), wenn betätigt;
einen Kontaktdetektor (103; 105; 106), neben dem Dreheingabegerät angebracht, zum Erzeugen eines Detektoreingabesignals (310), wenn in einer Ausgangsposition (120) betätigt,
**dadurch gekennzeichnet, dass**
das Dreheingabesignal und das Detektoreingabesignal ein zusammengesetztes Eingabesignal (312), zum Kontrollieren einer kontinuierlichen Funktion in einer Benutzerschnittstelle, erzeugen,
wenn eines der Eingabegeräte, das Dreheingabegerät oder das Detektoreingabegerät, betätigt wird bevor das andere der Eingabegeräte, das Dreheingabegerät oder das Detektoreingabegerät, in einer im Wesentlichen kontinuierlichen Benutzereingabe betätigt wird;
weitere Betätigung des anderen der Eingabegeräte, des Dreheingabegerätes oder des Detektoreingabegerätes, die kontinuierliche Funktion, initiiert von dem zusammengesetzten Eingabesignal, weiter kontrolliert; und
wobei die kontinuierliche Funktion eine Scrollingfunktion ist, Betätigung des Dreheingabegeräts entweder die Stärke oder die Richtung der Scrollingfunktion kontrolliert und die Betätigung des Kontaktdetektors von der Ausgangsposition zu einer zweiten Position die noch nicht kontrollierte Stärke oder Richtung der Scrollingfunktion kontrolliert.

2. Das Eingabegerät (100) gemäß Anspruch 1, wobei das Dreheingabegerät (102) eine Steuerkugel oder ein Drehrad ist.

3. Das Eingabegerät (100) irgendeines der vorhergehenden Ansprüche, wobei der Kontaktdetektor (103; 105; 106) ein kapazitives Touchpad ist.

4. Das Eingabegerät (100) irgendeines der vorhergehenden Ansprüche, wobei der Kontaktdetektor: das Dreheingabegerät umgibt; eine ringförmige Scheibe ist, welche konzentrisch um das Dreheingabegerät angebracht ist; oder ein zweidimensionales Feld aus Detektorelementen (104) umfasst.

5. Ein handgeführtes mobiles Kommunikationsgerät (210; 300) mit einer grafischen Benutzerschnittstelle (306) und einem Eingabegerät gemäß einem der vorgehenden Ansprüche 1 bis 4.

6. Das handgeführte mobile Kommunikationsgerät (300) gemäß Anspruch 5, ferner umfassend einen Erzeuger (306) eines zusammengesetzten Signals, wobei der Erzeuger (306) eines zusammengesetzten Signals konfiguriert ist zum Erzeugen des zusammengesetzten Eingabesignals (312), wenn das Dreheingabegerät (102) und der Kontaktdetektor (103; 105; 106) in der im Wesentlichen kontinuierlichen Benutzereingabe betätigt werden; und die kontinuierliche Funktion von dem zusammengesetzten Eingabesignal in der grafischen Benutzerschnittstelle (306) in Antwort auf das zusammengesetzte Eingabesignal kontrolliert wird.

7. Ein Verfahren zur Erzeugung einer kontinuierlichen Funktion in einer grafischen Benutzerschnittstelle (306) in einem handgeführten mobilen Kommunikationsgerät (210; 300), umfassend:
Detektieren einer im Wesentlichen kontinuierlichen Benutzerbetätigung eines Dreheingabegerätes (102) und eines Kontaktdetektors (103; 105; 106), angebracht neben dem Dreheingabegerät,
**dadurch gekennzeichnet, dass** das Verfahren ferner umfasst Erzeugen eines zusammengesetzten Eingabesignals (312) in Übereinstimmung mit der detektierten Betätigung eines der Eingabegeräte, des Dreheingabegerätes oder des Detektoreingabegerätes, vor der Betätigung des anderen Eingabegerätes, des Dreheingabegerätes oder des Detektoreingabegerätes;
Aktivieren der kontinuierlichen Funktion in Antwort auf das zusammengesetzte Eingabesignal;
weitere Betätigung des anderen der Eingabegeräte, des Dreheingabegerätes oder des Detektoreingabegerätes, die kontinuierliche Funktion, initiiert von dem zusammengesetzten Eingabesignal, weiter kontrolliert; und
wobei die kontinuierliche Funktion eine Scrollingfunktion ist, die Betätigung des Dreheingabegeräts entweder die Stärke oder die Richtung der Scrollingfunktion kontrolliert und die Betätigung des Kontaktdetektors von der Ausgangsposition zu einer zweiten Position die noch nicht kontrollierte Stärke oder Richtung der Scrollingfunktion kontrolliert.

8. Das Verfahren gemäß Anspruch 7 wobei das weitere Kontrollieren der kontinuierlichen Funktion das Kontrollieren der Geschwindigkeit oder Richtung der kontinuierlichen Funktion in Antwort auf die weitere Betätigung des Kontaktdetektors (103; 105; 106) umfasst.

9. Ein computerlesbares Medium zum Speichern von Programcode, welches ein Computergerät dazu veranlasst die Schritte des Verfahrens der Ansprüche 7 oder 8 auszuführen.

## Revendications

1. Dispositif d'entrée (100) pour un dispositif de communication mobile portatif (210, 300), comprenant :
un dispositif rotatif d'entrée (102) destiné à produire un signal rotatif d'entrée (308) lorsqu'il est actionné ; et
un détecteur de contact (103 ; 105 ; 106), implanté adjacent au dispositif rotatif d'entrée, afin de produire un signal de détecteur d'entrée (310) lorsqu'il est actionné dans une position initiale (120), **caractérisé en ce que**
le signal rotatif d'entrée et le signal de détecteur d'entrée produisent un signal composite d'entrée (312) afin de commander une fonction continue dans une interface utilisateur lorsque l'un des dispositifs, parmi le dispositif d'entrée rotatif et le dispositif de contact, est actionné avant l'actionnement de l'autre dispositif, parmi le dispositif d'entrée rotatif et le dispositif de contact, dans une entrée d'utilisateur substantiellement continue ;
dans lequel une poursuite de l'actionnement de l'autre dispositif, parmi le dispositif d'entrée rotatif et le dispositif de contact, continue de commander la fonction continue lancée par le signal composite d'entrée ; et
dans lequel la fonction continue est une fonction de défilement, l'actionnement du dispositif rotatif d'entrée commande un aspect parmi l'amplitude et la direction de la fonction de défilement et l'actionnement du détecteur de contact entre la position initiale et une seconde position commande l'autre aspect parmi l'amplitude et la direction de la fonction de défilement.

2. Dispositif d'entrée (100) selon la revendication 1, dans lequel le dispositif rotatif d'entrée (102) est une bille de commande ou une molette de défilement.

3. Dispositif d'entrée (100) selon l'une quelconque des revendications précédentes, dans lequel le détecteur de contact (103 ; 105 ; 106) est un pavé tactile capacitif.

4. Dispositif d'entrée (100) selon l'une quelconque des revendications précédentes, dans lequel le détecteur de contact :
entoure le dispositif rotatif d'entrée ;
est un disque annulaire implanté concentriquement autour du dispositif rotatif d'entrée ; ou
comprend un réseau d'éléments détecteurs (104).

5. Dispositif de communication mobile portatif (210, 300) ayant une interface utilisateur graphique (306) et un dispositif d'entrée selon l'une quelconque des revendications 1 à 4.

6. Dispositif de communication mobile portatif (300) selon la revendication 5, comprenant en outre un générateur de signal composite (306), le générateur de signal composite (306) étant configuré pour produire le signal composite d'entrée (312) lorsque le dispositif rotatif d'entrée (102) et le détecteur de contact (103 ; 105 ; 106) sont actionnés dans l'entrée d'utilisateur substantiellement continue ; et
dans lequel la fonction continue est commandée par le signal composite d'entrée dans l'interface utilisateur graphique (306) en réponse au signal composite d'entrée.

7. Procédé de production d'une fonction continue dans une interface utilisateur graphique (306) sur un dispositif de communication mobile portatif (210, 300), comprenant les étapes consistant à :
détecter un actionnement substantiellement continu par l'utilisateur d'un dispositif rotatif d'entrée (102) et d'un détecteur de contact (103 ; 105 ; 106) implanté adjacent du dispositif rotatif d'entrée, **caractérisé en ce que** le procédé comprend en outre les étapes consistant à :
produire un signal composite d'entrée (312) en fonction de l'actionnement détecté d'un dispositif parmi le dispositif rotatif d'entrée et le détecteur de contact avant l'actionnement de l'autre dispositif parmi le dispositif rotatif d'entrée et le détecteur de contact ; et
appeler la fonction continue en réponse au signal composite d'entrée,
dans lequel une poursuite de l'actionnement de l'autre dispositif, parmi le dispositif d'entrée rotatif et le détecteur de contact, continue de commander la fonction continue appelée par le signal composite d'entrée ; et
dans lequel la fonction continue est une fonction de défilement, l'actionnement du dispositif rotatif d'entrée commande un aspect parmi l'amplitude et la direction de la fonction de défilement et l'actionnement du détecteur de contact commande l'autre aspect parmi l'amplitude et la direction de la fonction de défilement.

8. Procédé selon la revendication 7, dans lequel la poursuite de la commande de la fonction continue comprend la commande de la vitesse ou de la direction de la fonction continue, en réponse à la poursuite de l'actionnement du détecteur de contact (103 ; 105 ; 106).

9. Support lisible par ordinateur stockant du code de programme afin de commander un dispositif de calcul d'exécuter les étapes du procédé selon la revendication 7 ou la revendication 8.
